# EUROPEAN PATENT SPECIFICATION

(11) **EP 2 698 584 B1**
(45) Date of publication and mention of the grant of the patent: **21.10.2015**
(21) Application number: 13161159.2
(22) Date of filing: 26.03.2013
(51) Int. Cl.: F24D 11/00, F28D 20/00

(54) **Pressureless accumulator for district heating systems**
Druckloser Akkumulator für Fernwärmeheizsysteme
Accumulateur sans pression pour systèmes de chauffage urbain

(43) Date of publication of application: 19.02.2014
(73) Proprietor: Aktiebolaget Tore J. Hedbäck, 112 20 Stockholm (SE)
(72) Inventor: Hedbäck. Anders J W, 112 20 Danderyd (SE)
(74) Representative: Zacco Sweden AB

(56) References cited:
- DE-A1- 3 226 461
- DE-A1- 3 618 307
- DE-U1-202005 007 941
- DE-U1-202006 002 535
- DE-U1-202011 000 562

## Description

### TECHNICAL FIELD

The present invention relates to a pressureless accumulator for district heating systems according to the preamble of claim 1.

### TECHNICAL BACKGROUND

District heating is a system for distributing heat generated in a centralized location for residential and commercial heating requirements such as space heating and water heating. District heating systems can vary in size from covering entire cities or may be designed to serve only a limited number of dwellings. The heat can be produced by for example cogeneration plants, waste incineration plants or by utilization of industrial waste heat. After generation, the heat is distributed to the customer via a network of insulated pipes. A common medium used for heat distribution is water.

The heat demand is different between for example day time and night time. To optimize the production of heat the heat demand is balanced by using heat storage reservoirs to store heat for later use. Different types of storage reservoirs can be used, for example hot water accumulator tanks. There are two different types of hot water accumulator tanks; pressurized and pressureless hot water accumulator tanks.

A pressurized hot water accumulator comprises a closed tank designed to hold fluids at a pressure substantially different from the ambient pressure. The pressure differential in a pressurized hot water accumulator tank can be dangerous and fatal accidents might occur. Consequently, pressurized hot water accumulator design, manufacture, maintenance, operation and inspection are regulated by engineering authorities backed by legislation. These regulations make the design, manufacture, maintenance, operation and inspection of pressurized hot water accumulator tanks more expensive in comparison with pressureless hot water accumulator tanks. Pressurized hot water accumulator tanks need for example to undergo periodic inspections, which pressureless hot water accumulator tanks do not need to undergo. Periodic inspections are both time consuming and expensive because the pressurized hot water accumulator tanks need to be emptied of all water before inspection. The production of pressurized hot water accumulator tanks is also more expensive in comparison with the production of pressureless hot water accumulator tanks due to that material with larger thickness is needed for pressurized hot water accumulator tanks. DE 202006 002 535 U1 describes a pressure tank for domestic heating and heating of tap water, according to the preamble of claim 1, suitable for pressureless operation.

An example of a known pressureless hot water accumulator for district heating systems is shown in document DE-A1-4305867. The pressureless hot water accumulator's diffusers are constructed so that the least possible turbulence will occur in the water volume of the accumulator tank, and so that a thin and stable partition layer is maintained between the hot water layer and the cold water layer when hot water and cold water are delivered at maximum flow in the tank, via the diffusers, and to a method and an arrangement for maintaining the water vapour present above the hot water layer at a substantially constant overpressure, so as to prevent the ingress of oxygen.

On the market today it also exist containers with a plurality of partition walls arranged inside the tank for the purpose of dividing the tank into a plurality of spaces. The partition walls of these accumulator tanks are provided with holes for allowing communication of medium between said spaces. By dividing the tank into spaces the stratification of the medium in the tank can be improved and maintained.

As a consequence, in light of the above drawbacks, there is a need of an improved accumulator that can accumulate water with a temperature of 100 °C or above and that is safer and less expensive to design, manufacture, maintain, operate and inspect.

### SUMMARY OF THE INVENTION

The subject of the present invention is to eliminate the drawbacks according to prior art. Further, the subject is to provide an accumulator that can accumulate water with a temperature of 100 °C or above and that is safer and less expensive to design, manufacture, maintain, operate and inspect.

These subjects have been by fulfilled with the pressureless accumulator for district heating systems according to claim 1.

More specifically the pressureless accumulator for district heating systems comprises a tank connected to at least one heat emitting system and at least one heat absorbing system. The tank comprises a lid, a bottom section and a top section. The bottom section comprises at least one first bottom inlet/outlet. The tank further comprises a partition wall arranged between the bottom section and the top section for the purpose of dividing the tank in a first compartment arranged above the partition wall and a second compartment arranged beneath the partition wall. The first compartment and the second compartment are in fluid communication with each other by at least one conduit. The first compartment comprises a first heat transfer medium and the second compartment comprises a second heat transfer medium. The second compartment further comprises a first top inlet/outlet arranged in the top of the second compartment. This pressureless accumulator for district heating systems can accumulate water with a temperature of 100 °C or above and is safer and less expensive to design, manufacture, maintain, operate and inspect.

In a further aspect of the invention the first compartment comprises at least one second top inlet/outlet arranged in the top section of the first compartment and at least one second bottom inlet/outlet arranged in the bottom of the first compartment. By providing at least one second top inlet/outlet and at least one second bottom inlet/outlet in the first compartment the first compartment can serve as an accumulator, besides as serving as an expansion tank.

In another aspect of the invention the conduit comprises at least one opening arranged between the partition wall and a top end of the conduit. By providing the conduit with said openings it is possible for the second heat transfer medium to expand to a space in the first compartment where the temperature of the first transfer medium is as close to the temperature of the supplied second heat transfer medium as possible to reduce or prevent the risk of turbulence that can destroy the stratification in the first compartment.

In a further aspect of the invention the conduit is elongated and a top end of the conduit is arranged close below the lowest level of the first heat transfer medium, preferably at a distance of about 1 meter below the lowest level of the first heat transfer medium. In yet another aspect of the invention the conduit comprises a bottom end arranged at a minimum distance of about 0.5 meter above the bottom of the second compartment. The latter two aspects make the accumulator more efficient.

In another aspect of the invention the conduit comprises a bottom end arranged close below the partition wall and a thermal seal arranged in circumferential of the bottom end. The medium in the thermal seal stratifies and therefore the thermal seal prevents second heat transfer medium to pass to the first compartment and first heat transfer medium to pass to the second compartment.

In a further aspect of the invention the second top inlet/outlet is provided with a float and connected to a float supported tube to be able to tap of heat transfer medium from immediately beneath the surface of the first heat transfer medium and thereby have access to the hottest heat transfer medium.

In yet another aspect of the invention the float supported tube is connected to the at least one heat emitting system and to the at least one heat absorbing system via a first inlet/outlet channel. In another aspect of the invention the second bottom inlet/outlet is connected to the at least one heat emitting system and to the at least one heat absorbing system via a third inlet/outlet channel. In a further aspect of the invention the first top inlet/outlet is connected to the at least one heat emitting system and to the at least one heat absorbing system via a second inlet/outlet channel. In yet another aspect of the invention the first bottom inlet/outlet is connected to the at least one heat emitting system and to the at least one heat absorbing system via a fourth inlet/outlet channel.

In yet another aspect of the invention the partition wall is made of an insulating material to prevent heat losses from the second heat transfer medium to the first heat transfer medium through the partition wall.

According to the invention the first heat transfer medium and the second heat transfer medium is water. Water is a cheap, accessible and not particularly corrosive heat carrier. In yet another aspect of the invention an exhaust pipe is arranged from the top of the second compartment to the top section of the first compartment to let gas in the second heat transfer medium to disappear. In a further aspect of the invention a plate is arranged above the top end of the conduit to prevent second heat transfer medium from the conduit to enter the surface of the first heat transfer medium.

Other objectives, embodiments and advantages of the present invention are described in closer detail in the description and in the subsequent patent claims.

### BRIEF DESCRIPTION OF THE DRAWINGS

The invention will hereinafter be described with reference to embodiments of the present invention and the accompanying drawings, in which:
- Fig. 1: shows a longitudinal sectional view of a pressureless accumulator in a first embodiment according to the present invention,
- Fig. 2: shows a longitudinal sectional view of a pressureless accumulator in a second embodiment according to the present invention.
- Fig. 3: shows a longitudinal sectional view of a pressureless accumulator in a third embodiment according to the present invention, and
- Fig. 4: shows a longitudinal sectional view of a pressureless accumulator in a fourth embodiment according to the present invention.

### DETAILED DESCRIPTION OF THE INVENTION

In the following a number of embodiments of the invention are shown and described. The same reference numbers have been used for the same or similar features throughout the description in the embodiments disclosed below.

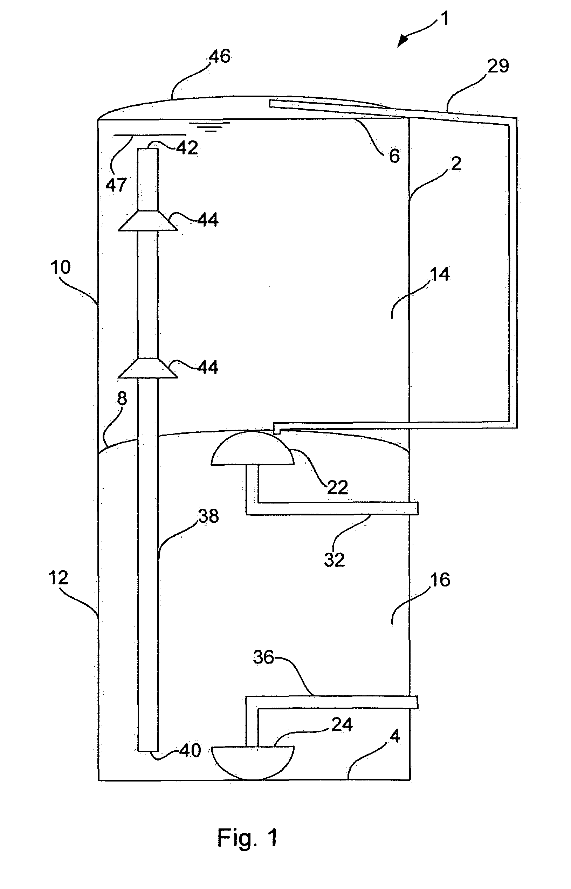

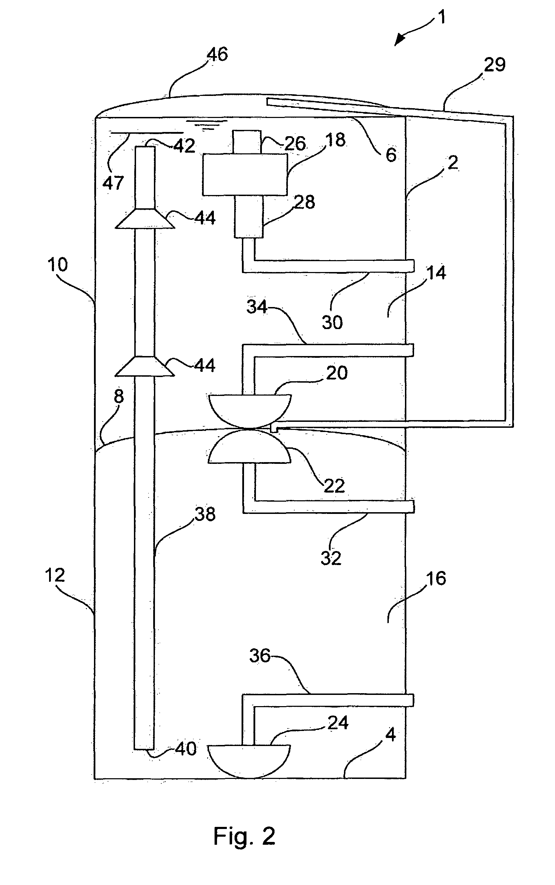

Fig. 1 shows a longitudinal sectional view of a pressureless accumulator 1 in a first embodiment according to the present invention. The pressureless accumulator 1 will be described with reference to both fig. 1 and fig. 2, which shows a longitudinal view of a pressureless accumulator 1 in a second embodiment according to the present invention. The pressureless accumulator 1 comprises a tank 2 with a bottom section 4 and a top section 6. The tank 2 is shaped like an upright straight cylinder and comprises a partition wall 8 between the bottom section 4 and the top section 6. The tank 2 can for example have a height of about 40-60 meter and a diameter of about 15-20 meter. The partition wall 8 divides the tank 2 in a first compartment 10 arranged above the partition wall 8 and below the top section 6 and a second compartment 12 arranged beneath the partition wall 8 and above the bottom section 4. The partition wall 8 is preferably made of an insulating material to prevent heat losses and arcuated to provide a strong construction of the accumulator 1.

A first heat transfer medium 14 is stored in the first compartment 10 and a second heat transfer medium 16 is stored in the second compartment 12. To prevent leakage of first heat transfer medium 14 from the first compartment 10 to the second compartment 12 and to prevent leakage of second heat transfer medium 16 from the second compartment 12 to the first compartment 10, the partition wall 8 is sealingly arranged onto the tank 2, for example welded onto the tank 2. The first heat transfer medium 14 and the second heat transfer medium 16 is water because water is a cheap, accessible and not particularly corrosive heat carrier.

According to fig. 2, the first compartment 10 comprises at least one second top inlet/outlet 18 and at least one second bottom inlet/outlet 20 for introducing and tapping off the first heat transfer medium 14. According to both fig. 1 and fig 2, the second compartment 12 comprises at least one first top inlet/outlet 22 and at least one first bottom inlet/outlet 24 for introducing and tapping of the second heat transfer medium 16. The introducing and tapping of can be done simultaneously. The inlets/outlets 18, 20, 22, 24 can be diffusers.

The pressureless accumulator 1 is preferably used in a district heating system. The pressureless accumulator 1 is connected between at least one heat emitting system, for example a plant, and at least one heat absorbing system, which consumes the heat that is stored in the accumulator 1, for example the network in a district heating system. This allows for, to a large extent, the heat emitting system to produce the heat when it is most favourable with respect to, for example, electricity prices. When the heat production is higher than the consumption, the pressureless accumulator 1 is automatically charged. Similarly, the pressureless accumulator 1 is discharged when the heat production is below the consumption.

When charging the pressureless accumulator 1 in fig. 1, second heat transfer medium 16 is supplied by the first top inlet/outlet 22 in the second compartment 12. When charging the pressureless accumulator 1 in fig. 2 first heat transfer medium 14 is supplied by the second top inlet/outlet 18 in the first compartment 10 and/or second heat transfer medium 16 is supplied by the first top inlet/outlet 22 in the second compartment 12. Simultaneously first heat transfer medium 14, of the same amount as the supplied first heat transfer medium 14, is tapped of by the second bottom inlet/outlet 20 and/or second heat transfer medium 16, of the same amount as the supplied second heat transfer medium 16, is tapped of by the first bottom inlet/outlet 24.

When discharging the pressureless accumulator 1 the flow is reversed. In fig. 1 second heat transfer medium 16 is tapped of by the first top inlet/outlet 22. In fig. 2 first heat transfer medium 14 is tapped of by the second top inlet/outlet 18 and/or second heat transfer medium 16 is tapped of by the first top inlet/outlet 22. Simultaneously first heat transfer medium 14, of the same amount as the tapped of first heat transfer medium 14, is supplied by the second bottom inlet/outlet 20 and/or second heat transfer medium 16, of the same amount as the tapped of second heat transfer medium 16, is introduced by the first bottom inlet/outlet 24.

When the pressureless accumulator 1 has been charged and has not been used for some time the first heat transfer medium 14 in the first compartment 10 and the second heat transfer medium 16 in the second compartment 12 will stratify, i.e. form layers, with the hottest first heat transfer medium 14 at the top in the first compartment 10, the hottest second heat transfer medium 16 at the top in the second compartment 12, the coldest first heat transfer medium 14 at the bottom of the first compartment 10 and the coldest second heat transfer medium 16 at the bottom of the second compartment 12 due to the fact that hot transfer medium 14, 16 has lower density than cold transfer medium 14, 16.

The first compartment 10 is never full with first heat transfer medium 14. The second top inlet/outlet 18, in fig. 2, can be fixedly arranged under the lowest level of first heat transfer medium 14, but is preferably not fixedly arranged and provided with a float 26 and connected to a float supported tube 28 (but is otherwise identical with the other inlets/outlets 20, 22, 24) to be able to tap of heat transfer medium 14 from immediately beneath the surface of the first heat transfer medium 14 and thereby have access to the hottest heat transfer medium 14. The second compartment 12 is constantly full of second heat transfer medium 16; therefore the first top inlet/outlet 22 is arranged in the top of the second compartment 12. An exhaust pipe 29 is arranged from the top of the second compartment 12 to the top section 6 of the first compartment 10, above the highest level of the first heat transfer medium 14, and is always open to let gas in the second heat transfer medium 16 to disappear. It is favourable for the heat emitting system to heat as cold heat transfer medium 14, 16 as possible, therefore the second bottom inlet/outlet 20 is arranged in the bottom of the first compartment 10 and the first bottom inlet/outlet 24 is arranged in the bottom of the second compartment 12.

The second top inlet/outlet 18 or the float supported tube 28 (if the second top inlet/outlet 18 is connected to the float supported tube 28) is connected to a first inlet/outlet channel 30, the first top inlet/outlet 22 is connected to a second inlet/outlet channel 32, the second bottom inlet/outlet 20 is connected to a third inlet/outlet channel 34 and the first bottom inlet/outlet 24 is connected to a fourth inlet/outlet channel 36. The first inlet/outlet channel 30, the second inlet/outlet channel 32, the third inlet/outlet channel 34 and the fourth inlet/outlet channel 36 are connected to at least one heat absorbing system and to at least one heat emitting system. If the first compartment 10 and the second compartment 12 is connected to the same heat emitting system and heat absorbing system a heat exchanger is arranged in the heat emitting system or the heat absorbing system.

The amount of first heat transfer medium 14 in the first compartment 10 varies between a minimum and a maximum amount. The first heat transfer medium 14 loads the partition wall 8 and thereby the height of first heat transfer medium 14 in the first compartment 10 determines the pressure and thus the temperature in the second compartment 12. The minimum height of first heat transfer medium 14 in the first compartment 10 is chosen so that the temperature of the hottest second heat transfer medium 16 in the second compartment 12 is higher than the boiling point at atmospheric pressure. The temperature is between about 110 °C and about 160 °C. For example, the amount of first heat transfer medium 14 in the first compartment 10 can be about 8000 m³ and the amount of second heat transfer medium 16 in the second compartment 12 can be about 8000 m³. The partition wall 8 is preferably made of an insulating material to prevent heat losses from the second heat transfer medium 16 to the first heat transfer medium 14 through the partition wall 8.

Due to safety reasons the first compartment 10 and the second compartment 12 is in fluid communication with each other by at least one conduit 38 that is not closable. Thus the first compartment 10 serves as an expansion tank. Therefore the maximum amount of first heat transfer medium 14 is chosen so that the first compartment 10 can accommodate second heat transfer medium 16 supplied, via the conduit 38, from the second compartment 12. The pressure in the pressureless accumulator 1 is almost constant. When the temperature of the second heat transfer medium 16 rises, the volume of the second heat transfer medium 16 increases and the second heat transfer medium 16 expands, via the conduit 38, to the first compartment 10. It is also possible for first heat transfer medium 14 to be supplied, via the conduit 38, to the second compartment 12.

The at least one conduit 38 is preferably elongated and can be arranged inside or outside the tank 2. If the conduit 38 is arranged inside the tank 2 the conduit 38 extends through the partition wall 8. Preferably a bottom end 40 of the conduit 38 is arranged close to the bottom of the second compartment 12, preferably at the same height above the bottom of the second compartment 12 as the first bottom inlet/outlet 24 is arranged, to maximise the amount of heat in the second heat transfer medium 16. Preferably the bottom end 40 of the conduit 38 is arranged not closer than 0.5 meter above the bottom of the second compartment 12. Preferably a top end 42 of the conduit 38 is arranged slightly below the lowest level of the first heat transfer medium 14, preferably at a distance of 1 meter below the lowest level of the first heat transfer medium 14, and preferably the conduit comprise at least one opening 44, for example two openings 44, between the partition wall 8 and the top end 42 of the conduit 38. By arranging the top end 42 of the conduit 38 slightly below the lowest level of the first heat transfer medium 14 and by providing the conduit 38 with said openings 44 it is possible for the second heat transfer medium 16 to be passed to a space in the first compartment 10 where the temperature of the first transfer medium 14 is as close to the temperature of the supplied second heat transfer medium 16 as possible to reduce or prevent the risk of turbulence that can destroy the stratification in the first compartment 10. Accordingly, very hot second heat transfer medium 16 is conducted to the top end 42 of the conduit 38, whereas less hot second heat transfer medium 16 is conducted to a space further down. By providing the conduit 38 with more openings 44 the second heat transfer medium 16 will be conducted with greater precision at the right level in the first compartment 10. Preferably the conduit 38 is isolated to reduce or prevent energy losses and thermal movement. The tank 2 also comprises a lid 46 in the top of the first compartment 10 to lead vapour in the first compartment 10 to the surrounding environment of the tank 2. A plate 47 is arranged above the top end 42 of the conduit 38 to prevent second heat transfer medium 16 from the conduit 38 to enter the surface of the first heat transfer medium 14. Preferably the plate 47 has a diameter about twice as big as the conduits 38 diameter.

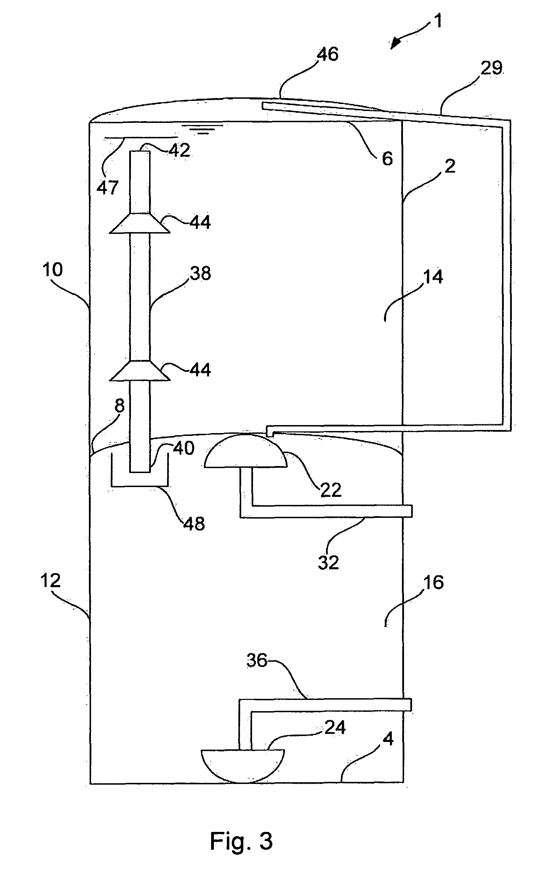

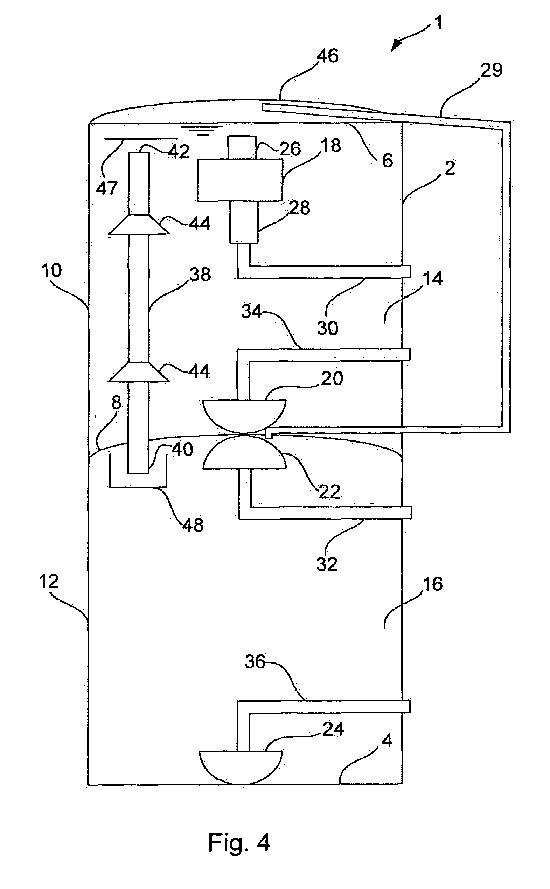

Fig. 3 shows a longitudinal sectional view of a pressureless accumulator 1 in a third embodiment according to the present invention. Fig. 4 shows a longitudinal sectional view of a pressureless accumulator 1 in a fourth embodiment according to the present invention. The first embodiment and the third embodiment as well as the second embodiment and the fourth embodiment of the pressureless accumulator 1 is the same except from that a shorter conduit 38 is used in the third and fourth embodiment and that a thermal seal 48 is arranged in circumferential of the bottom end 40. The bottom end 40 of the conduit 38 is arranged between the bottom of the second compartment 12 and the partition wall 8. The smaller the distance is between the bottom end 40 of the conduit 38 and the bottom of the second compartment 12 the better because the amount of heat in the second heat transfer medium 16 becomes greater. But it is not preferable that the distance is smaller than about 0.5 meter. The thermal seal 48 is preferably double jacketed to prevent heat losses.

## Claims

1. A pressureless accumulator (1) for district heating systems, comprising a tank (2) connected to at least one heat emitting system and at least one heat absorbing system, wherein the tank (2) comprises a lid (46), a bottom section (4) and a top section (6), wherein the bottom section (4) comprises at least one first bottom inlet/outlet (24), wherein the tank (2) further comprises a partition wall (8) arranged between the bottom section (4) and the top section (6) for the purpose of dividing the tank in a first compartment (10) arranged above the partition wall (8) and a second compartment (12) arranged beneath the partition wall (8), wherein the first compartment (10) and the second compartment (12) are in fluid communication with each other by at least one conduit (38), wherein the first compartment (10) comprises a first heat transfer medium (14) and the second compartment (12) comprises a second heat transfer medium (16), wherein the second compartment (12) further comprises a first top inlet/outlet (22) arranged in the top of the second compartment (12),
**characterized in that**
the tank (2) is configured to provide a minimum height of first heat transfer medium (14) in the first compartment (10) in order to create a pressure in the second heat transfer medium (16) in the second compartment (12) so that the pressure of the second heat transfer medium (16) in the second compartment (12) is higher than the boiling pressure of the second heat transfer medium (16) having the highest temperature in the second compartment (12), said highest temperature being 110-160 °C, said first and second heat transfer media being water.

2. The pressureless accumulator (1) according to claim 1, **characterized in that** the first compartment (10) comprises at least one second top inlet/outlet (18) arranged in the top section (6) of the first compartment (10) and at least one second bottom inlet/outlet (20) arranged in the bottom of the first compartment (10).

3. The pressureless accumulator (1) according to any of the above claims, **characterized in that** the conduit (38) comprises at least one opening (44) arranged between the partition wall (8) and a top end (42) of the conduit (38).

4. The pressureless accumulator (1) according to any of the above claims, **characterized in that** the conduit (38) is elongated and that the top end (42) of the conduit (38) is arranged at a distance of about 1 meter below the lowest level of the first heat transfer medium (14).

5. The pressureless accumulator (1) according to any of the above claims, **characterized in that** the conduit (38) comprises a bottom end (40) arranged at a minimum distance of about 0.5 meter above the bottom of the second compartment (12).

6. The pressureless accumulator (1) according to any of the above claims, **characterized in that** the second top inlet/outlet (18) is provided with a float (26) and connected to a float supported tube (28).

7. The pressureless accumulator (1) according to claim 6, **characterized in that** the float supported tube (28) is connected to the at least one heat emitting system and to the at least one heat absorbing system via a first inlet/outlet channel (30).

8. The pressureless accumulator (1) according to any of the above claims, **characterized in that** the second bottom inlet/outlet (20) is connected to the at least one heat emitting system and to the at least one heat absorbing system via a third inlet/outlet channel (34).

9. The pressureless accumulator (1) according to any of the above claims, **characterized in that** the first top inlet/outlet (22) is connected to the at least one heat emitting system and to the at least one heat absorbing system via a second inlet/outlet channel (32).

10. The pressureless accumulator (1) according to any of the above claims, **characterized in that** the first bottom inlet/outlet (24) is connected to the at least one heat emitting system and to the at least one heat absorbing system via a fourth inlet/outlet channel (36).

11. The pressureless accumulator (1) according to any of the above claims, **characterized in that** the partition wall (8) is made of an insulating material.

12. The pressureless accumulator (1) according to any of the above claims **characterized in that** an exhaust pipe (29) is arranged from the top of the second compartment (12) to the top section (6) of the first compartment (10)

13. The pressureless accumulator (1) according to any of the above claims **characterized in that** a plate (47) is arranged above the top end (42) of the conduit (38).

## Patentansprüche

1. Druckloser Akkumulator (1) für Fernwärmeheizsysteme, umfassend einen mit zumindest einem Wärmeabgabesystem und zumindest einem wärmeabsorbierenden System verbundenen Behälter (2), wobei der Behälter (2) einen Deckel (46), einen unteren Abschnitt (4) und einen oberen Abschnitt (6) umfasst, wobei der untere Abschnitt (4) zumindest einen ersten unteren Einlass/Auslass (24) umfasst,
wobei der Behälter (2) ferner eine zwischen dem unteren Abschnitt (4) und dem oberen Abschnitt (6) angeordnete Trennwand (8) zum Zwecke der Einteilung des Behälters in eine über der Trennwand (8) angeordnete erste Kammer (10) und eine unter der Trennwand (8) angeordnete zweite Kammer (12) umfasst, wobei die erste Kammer (10) und die zweite Kammer (12) über zumindest ein Leitungsrohr (38) miteinander in Fluidverbindung stehen, wobei die erste Kammer (10) ein erstes Wärmeübertragungsmedium (14) umfasst, und die zweite Kammer (12) ein zweites Wärmeübertragungsmedium (16) umfasst, wobei die zweite Kammer (12) ferner einen ersten im oberen Teil der zweiten Kammer (12) angeordneten oberen Einlass/Auslass (22) umfasst,
**dadurch gekennzeichnet, dass**
der Behälter (2) dazu ausgebildet ist, eine Mindesthöhe des ersten Wärmeübertragungsmediums (14) in der ersten Kammer (10) bereitzustellen, um einen Druck im zweiten Wärmeübertragungsmedium (16) in der zweiten Kammer (12) herzustellen, damit der Druck des zweiten Wärmeübertragungsmediums (16) in der zweiten Kammer (12) höher als der Siededruck des zweiten Wärmeübertragungsmediums (16) ist, aufweisend die höchste Temperatur in der zweiten Kammer (12), wobei die höchste Temperatur 110-160 °C beträgt, wobei das erste und zweite Wärmeübertragungsmedium Wasser sind.

2. Druckloser Akkumulator (1) nach Anspruch 1, **dadurch gekennzeichnet, dass** die erste Kammer (10) zumindest einen zweiten im oberen Abschnitt (6) der ersten Kammer (10) angeordneten oberen Einlass/Auslass (18) und zumindest einen zweiten am Boden der ersten Kammer (10) angeordneten unteren Einlass/Auslass (20) umfasst.

3. Druckloser Akkumulator (1) nach einem der vorhergehenden Ansprüche, **dadurch gekennzeichnet, dass** das Leitungsrohr (38) zumindest eine zwischen der Trennwand (8) und einem oberen Ende (42) des Leitungsrohrs (38) angeordnete Öffnung (44) umfasst.

4. Druckloser Akkumulator (1) nach einem der vorhergehenden Ansprüche, **dadurch gekennzeichnet, dass** das Leitungsrohr (38) länglich ist, und dass das obere Ende (42) des Leitungsrohrs (38) in einem Abstand von ungefähr 1 Meter unter der niedrigsten Ebene des ersten Wärmeübertragungsmediums (14) angeordnet ist.

5. Druckloser Akkumulator (1) nach einem der vorhergehenden Ansprüche, **dadurch gekennzeichnet, dass** das Leitungsrohr (38) ein in einem Mindestabstand von ungefähr 0,5 Meter über dem Boden der zweiten Kammer (12) angeordnetes unteres Ende (40) umfasst.

6. Druckloser Akkumulator (1) nach einem der vorhergehenden Ansprüche, **dadurch gekennzeichnet, dass** der zweite obere Einlass/Auslass (18) mit einem Schwimmer (26) versehen ist und mit einem Schwimmer-unterstützten Rohr (28) verbunden ist.

7. Druckloser Akkumulator (1) nach Anspruch 6, **dadurch gekennzeichnet, dass** das Schwimmer-unterstützte Rohr (28) über einen ersten Einlass-/Auslasskanal (30) mit dem zumindest einen Wärmeabgabesystem und mit dem zumindest einen wärmeabsorbierenden System verbunden ist.

8. Druckloser Akkumulator (1) nach einem der vorhergehenden Ansprüche, **dadurch gekennzeichnet, dass** der zweite untere Einlass/Auslass (20) über einen dritten Einlass-/Auslasskanal (34) mit dem zumindest einen Wärmeabgabesystem und mit dem zumindest einen wärmeabsorbierenden System verbunden ist.

9. Druckloser Akkumulator (1) nach einem der vorhergehenden Ansprüche, **dadurch gekennzeichnet, dass** der erste obere Einlass/Auslass (22) über einen zweiten Einlass-/Auslasskanal (32) mit dem zumindest einen Wärmeabgabesystem und mit dem zumindest einen wärmeabsorbierenden System verbunden ist.

10. Druckloser Akkumulator (1) nach einem der vorhergehenden Ansprüche, **dadurch gekennzeichnet, dass** der erste untere Einlass/Auslass (24) über einen vierten Einlass-/Auslasskanal (36) mit dem zumindest einen Wärmeabgabesystem und mit dem zumindest einen wärmeabsorbierenden System verbunden ist.

11. Druckloser Akkumulator (1) nach einem der vorhergehenden Ansprüche, **dadurch gekennzeichnet, dass** die Trennwand (8) aus einem Isoliermaterial hergestellt ist.

12. Druckloser Akkumulator (1) nach einem der vorhergehenden Ansprüche, **dadurch gekennzeichnet, dass** ein Ableitungsrohr (29) vom oberen Teil der zweiten Kammer (12) zum oberen Abschnitt (6) der ersten Kammer (10) angeordnet ist.

13. Druckloser Akkumulator (1) nach einem der vorhergehenden Ansprüche, **dadurch gekennzeichnet, dass** eine Platte (47) über dem oberen Ende (42) des Leitungsrohrs (38) angeordnet ist.

## Revendications

1. Accumulateur sans pression (1) pour les systèmes de chauffage urbain, comprenant un réservoir (2) relié à au moins un système émetteur de chaleur et au moins un système d'absorption de chaleur, le réservoir (2) comprenant un couvercle (46), une section inférieure (4) et une section supérieure (6), la section inférieure (4) comprenant au moins une première entrée/sortie inférieure (24), le réservoir (2) comprenant en outre une paroi de séparation (8) disposée entre la section inférieure (4) et la section supérieure (6) dans le but de diviser le réservoir en un premier compartiment (10) disposé au-dessus de la paroi de séparation (8) et un deuxième compartiment (12) disposé en dessous de la paroi de séparation (8), le premier compartiment (10) et le deuxième compartiment (12) étant en communication fluidique l'un avec l'autre par au moins un conduit (38), le premier compartiment (10) comprenant un premier moyen de transfert thermique (14) et le deuxième compartiment (12) comprenant un deuxième moyen de transfert thermique (16), le deuxième compartiment (12) comprenant en outre une première entrée/sortie supérieure (22) disposée dans la partie supérieure du deuxième compartiment (12),
**caractérisé en ce que**
le réservoir (2) est configuré de manière à prévoir une hauteur minimale du premier moyen de transfert thermique (14) dans le premier compartiment (10) afin de créer une pression dans le deuxième moyen de transfert thermique (16) dans le deuxième compartiment (12) si bien que la pression du deuxième moyen de transfert thermique (16) dans le deuxième compartiment (12) est supérieure à la pression d'ébullition du deuxième moyen de transfert thermique (16) ayant la plus haute température dans le deuxième compartiment (12), ladite plus haute température étant comprise entre 110 et 160°C, lesdits premier et deuxième moyens de transfert thermique étant de l'eau.

2. Accumulateur sans pression (1) selon la revendication 1, **caractérisé en ce que** le premier compartiment (10) comprend au moins une deuxième entrée/sortie supérieure (18) disposée dans la section supérieure (6) du premier compartiment (10) et au moins une deuxième entrée/sortie inférieure (20) disposée dans la partie inférieure du premier compartiment (10).

3. Accumulateur sans pression (1) selon l'une quelconque des revendications précédentes, **caractérisé en ce que** le conduit (38) comprend au moins une ouverture (44) disposée entre la paroi de séparation (8) et une extrémité supérieure (42) du conduit (38).

4. Accumulateur sans pression (1) selon l'une quelconque des revendications précédentes, **caractérisé en ce que** le conduit (38) est allongé, et **en ce que** l'extrémité supérieure (42) du conduit (38) est disposée à une distance d'environ 1 mètre au-dessous du plus bas niveau du premier moyen de transfert thermique (14).

5. Accumulateur sans pression (1) selon l'une quelconque des revendications précédentes, **caractérisé en ce que** le conduit (38) comprend une extrémité inférieure (40) disposée à une distance minimale d'environ 0,5 mètre au-dessus de la partie inférieure du deuxième compartiment (12).

6. Accumulateur sans pression (1) selon l'une quelconque des revendications précédentes, **caractérisé en ce que** la deuxième entrée/sortie supérieure (18) est munie d'un flotteur (26) et reliée à un tube soutenu à flotteur (28).

7. Accumulateur sans pression (1) selon la revendication 6, **caractérisé en ce que** le tube soutenu à flotteur (28) est relié à l'au moins un système émetteur de chaleur et à l'au moins un système d'absorption de chaleur par l'intermédiaire d'un premier canal d'entrée/sortie (30).

8. Accumulateur sans pression (1) selon l'une quelconque des revendications précédentes, **caractérisé en ce que** la deuxième entrée/sortie inférieure (20) est reliée à l'au moins un système émetteur de chaleur et à l'au moins un système d'absorption de chaleur par l'intermédiaire d'un troisième canal d'entrée/sortie (34).

9. Accumulateur sans pression (1) selon l'une quelconque des revendications précédentes, **caractérisé en ce que** la première entrée/sortie inférieure (22) est reliée à l'au moins un système émetteur de chaleur et à l'au moins un système d'absorption de chaleur par l'intermédiaire d'un deuxième canal d'entrée/sortie (32).

10. Accumulateur sans pression (1) selon l'une quelconque des revendications précédentes, **caractérisé en ce que** la première entrée/sortie inférieure (24) est reliée à l'au moins un système émetteur de chaleur et à l'au moins un système d'absorption de chaleur par l'intermédiaire d'un quatrième canal d'entrée/sortie (36).

11. Accumulateur sans pression (1) selon l'une quelconque des revendications précédentes, **caractérisé en ce que** la paroi de séparation (8) est réalisée en un matériau isolant.

12. Accumulateur sans pression (1) selon l'une quelconque des revendications précédentes, **caractérisé en ce qu'**un tuyau d'échappement (29) est disposé à partir de la partie supérieure du deuxième compartiment (12) à la section supérieure (6) du premier compartiment (10).

13. Accumulateur sans pression (1) selon l'une quelconque des revendications précédentes, **caractérisé en ce qu'**une plaque (47) est disposée au-dessus de l'extrémité supérieure (42) du conduit (38).
